# EUROPÄISCHE PATENTSCHRIFT

(11) **EP 0 980 781 B1**
(45) Veröffentlichungstag und Bekanntmachung des Hinweises auf die Patenterteilung: **13.04.2005**
(21) Anmeldenummer: 99111826.6
(22) Anmeldetag: 19.06.1999
(51) Int. Cl.: B60K 28/16, B60T 8/00

(54) **Verfahren und Vorrichtung zur Antriebsschlupfregelung bei Kraftfahrzeugen**
Method and device for traction control in motor vehicles
Méthode et dispositif d'antipatinage pour véhicules automobiles

(30) Priorität: 19.08.1998 DE 19837523
(43) Veröffentlichungstag der Anmeldung: 23.02.2000
(73) Patentinhaber: ROBERT BOSCH GMBH, 70442 Stuttgart (DE)
(72) Erfinder: Wandel, Helmut, 71706 Markgroenigen (DE)

(56) Entgegenhaltungen:
- EP-A- 0 163 941
- DE-A- 4 433 459

## Beschreibung

### Stand der Technik

Die Erfindung betrifft ein Verfahren und eine Vorrichtung zur Antriebsschlupfregelung bei Kraftfahrzeugen.

Antriebsschlupfregelungen sind aus dem Stand der Technik in vielfältiger Ausprägung bekannt. Beispielsweise zeigt die gattungsbildende EP-B1 0 163 941 (US-Patent 4 625 824) ein Antriebsschlupfregelsystem, bei welchem bei erkannter Durchdrehneigung wenigstens eines Antriebsrades dieses Rad gebremst und/oder die Antriebseinheit des Fahrzeugs zur Reduzierung ihres Drehmoments veranlaßt wird. In wenigstens einem Betriebsbereich wird das zuerst eine Durchdrehneigung zeigende Rad gebremst, während das andere Antriebsrad auch bei vorhandener Durchdrehneigung unbeeinflußt bleibt. In einigen Betriebssituationen, beispielsweise bei einer Fahrbahn mit großen Reibwertunterschieden an den Antriebsrädern oder bei Steigungen, kann es vorkommen, daß während eines Antriebsschlupfregeleingriffs an einem Rad auch das zweite, bisher stabile Rad Durchdrehneigung aufweist. Traktion und Seitenführung des Fahrzeugs gehen dabei verloren, Schwingungsverhalten kann auftreten. Wird nun zur Reduzierung des Sperrmoments in einem solchen Fall Bremskraft an dem Rad abgebaut, an dem ein Antriebsschlupfregeleingriff gerade stattfindet, so ist es wahrscheinlich, daß beim nächsten Bremskraftaufbau eine entsprechende, die Traktion bzw. Seitenführung beeinträchtigende Situation auftritt.

Es ist Aufgabe der Erfindung, Maßnahmen anzugeben, eine Antriebsschlupfregelung mit Blick auf Traktion und Seitenführung weiter zu verbessern.

Dies wird durch die kennzeichnenden Merkmale der unabhängigen Patentansprüche 1 und 8 erreicht.

Aus der EP 593 509 B1 ist ein Antriebsschlupfregelsystem bekannt, bei welchem der aktuelle in der jeweiligen Radbremse herrschende Bremsdruck auf der Basis der zur Bremsdrucksteuerung ausgegebenen Pulse geschätzt wird.

### Vorteile der Erfindung

Die erfindungsgemäße Lösung stellt eine Antriebsschlupfregelung bereit, bei welcher Traktion und Seitenführung verbessert ist. Besonders vorteilhaft ist, daß eine einmal aufgetretene Betriebssituation, in der Traktion und Seitenführung beeinträchtigende Situation während einer Antriebsschlupfregelung mit großer Wahrscheinlichkeit nicht auftritt.

Vorteilhaft ist die erfindungsgemäße Lösung dann, wenn während einer Antriebsschlupfregelung ein Bremskraftabbau am geregelten Rad vor erkannter, jedoch vorhandener Durchdrehneigung des anderen Rades (High-Rad-Abriss) durchgeführt wird. Damit wird dann durch Begrenzung des Bremskraftaufbaus eine weitere Instabilität bzw. ein weiterer High-Rad-Abriss vermieden, Traktion und Seitenführung aufrechterhalten und unkomfortable Schwingungsverhalten wirksam verhindert.

Von Vorteil ist ferner, daß nicht nur eine Begrenzung des Bremskraftaufbaus, sondern auch eine Verlangsamung des Bremskraftaufbaus bei Annäherung an den Grenzwert vorgenommen wird, um ein Überschießen der Bremskraft zu vermeiden.

Von besonderem Vorteil ist, daß durch die erfindungsgemäße Lösung die verfügbare und die übertragbare Bremskraft optimal ausgenutzt wird, wobei genügend Sperrmoment und Traktion bei gleichzeitig gutem Komfort vorhanden ist.

Vorteilhaft ist, daß das Anfahren am Berg mit 10 bis 15 % Steigung wirksam verbessert wird.

### Zeichnung

Die Erfindung wird anhand der in der Zeichnung dargestellten Ausführungsformen näher erläutert. Figur 1 zeigt eine Steuereinheit zur Steuerung des Antriebsschlupfes, während in Figur 2 ein bevorzugtes Ausführungsbeispiel der erfindungsgemäßen Lösung als Flußdiagramm dargestellt ist. Figur 3 zeigt Zeitdiagramme, die die Wirkungsweise dieser Lösung weiter verdeutlichen.

### Beschreibung von Ausführungsbeispielen

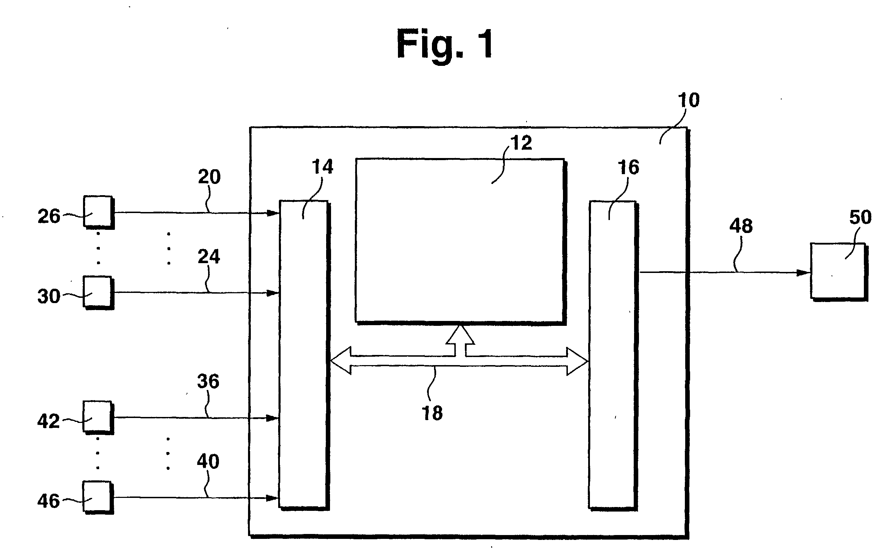

Figur 1 zeigt eine Steuereinheit 10, die im wesentlichen aus wenigstens einem Mikrocomputer 12, einer Eingangsschaltung 14, einer Ausgangsschaltung 16 und einem Kommunikationssystem 18 besteht, welches die vorstehend genannten Komponenten verbindet. Über Eingangsleitungen 20 bis 24 werden der Steuereinheit 10, dort der Eingangsschaltung 14 Signale von Meßeinrichtungen 26 bis 30 zugeführt, welche die Geschwindigkeiten der Räder des Fahrzeugs repräsentieren. Daneben sind Eingangsleitungen 36 bis 40 vorgesehen, welche von Meßeinrichtungen 42 bis 46 weitere Betriebsgrößen der Antriebseinheit und/oder des Fahrzeugs zuführen, die in Verbindung mit der Antriebsschlupfregelung benötigt werden. Beispiele für derartige Betriebsgrößen sind das von der Antriebseinheit abgegebene Drehmoment, im Ausführungsbeispiel einer Brennkraftmaschine der Drosselklappenwinkel, verschiedene Temperaturgrößen, die Motordrehzahl, etc. Die Meßeinrichtungen stellen dabei Sensoren dar, die die bezeichneten Größen ermitteln oder in anderen Ausführungen Einrichtungen, die die Größen aus einem oder mehreren Meßsignalen bestimmen. Über die Ausgangsleitung 48 beeinflußt die Steuereinheit 10 die Bremsanlage 50 des Fahrzeugs, wobei in einem bevorzugten Ausführungsbeispiel einer hydraulischen Bremsanlage Ansteuerpulse zur Steuerung der einer Radbremse zugeordneten Ventilanordnungen zum Bremsdruckaufbau bzw. -abbau ausgegeben werden.

Je nach Ausführungsbeispiel handelt es sich bei der Bremsanlage 50 um eine hydraulische, eine pneumatische oder eine elektromotorische Bremsanlage (Radbremse mit elektromotorischer Zuspannung) oder Kombinationen dieser Bremsanlagen. Daher wird im folgenden von Bremskraft an den Rädern gesprochen, was je nach Ausführung, den Bremsdruck, die Bremskraft zwischen Fahrbahn und Reifen, die Bremskraft im Bereich der Radbremse, ein dort ausgeübtes Bremsmoment, eine eine solche Größe repräsentierende Stromgröße, etc. bedeutet. Entsprechend werden je nach Ausführungsbeispiel neben den oben genannten Pulsen als Ansteuersignal pulsweitenmodulierte Signale ausgegeben, welche eine kontinuierliche Verstellung des Bremsenstellers erlauben (z.B. pulsweitenmodulierte Stromsignale zur Steuerung des die Zuspannung bewirkenden Elektromotors).

Wie zum Beispiel aus dem eingangs genannten Stand der Technik bekannt, wird bei Auftreten einer Durchdrehneigung an einem Antriebsrad Bremskraft an diesem Antriebsrad aufgebaut. Dabei wird ein Sperrmoment erzeugt, welches die Traktion des Fahrzeugs und die Seitenführung des Fahrzeugs verbessert. In besonderen Betriebssituationen, beispielsweise bei großen Reibwertunterschieden an den Antriebsrädern des Fahrzeugs und/oder beim Anfahren am Berg mit Steigungen von 10 bis 15 % kann es vorkommen, daß während der Regelung bei aufgebauter Bremskraft auch das andere Antriebsrad durchdreht. Dieser sogenannte High-Rad-Abriss führt dazu, daß sowohl die Traktion als auch die Seitenführung beeinträchtigt wird. Um diese Betriebssituation zu beherrschen, wird versucht, daß Sperrmoment zu reduzieren, indem am geregelten Rad Bremskraft wieder abgebaut wird. Läuft das andere, nicht geregelte Rad wieder stabil, wird bei Vorliegen eines entsprechenden unzulässigen Schlupfes am geregelten Rad Bremskraft wieder aufgebaut. Dabei kann es vorkommen, daß die vorstehend beschriebene Situation erneut auftritt, eine weitere Instabilität bzw. ein High-Rad-Abriss auftritt und damit Seitenführung verloren geht, bzw. das Fahrzeug unkomfortables Schwingungsverhalten aufweist, da die Instabilitäten an den Antriebsrädern wechselweise auftreten. Erfindungsgemäß wird daher bei Erkennen einer wie vorstehend beschriebenen Betriebssituation während einer Antriebsschlupfregelung, wenn neben dem geregelten Antriebsrad auch das nicht geregelte Antriebsrad Instabilität zeigt, das zu diesem Zeitpunkt vorhandene Bremskraftniveau gespeichert und während der weiteren Regelung weiter verarbeitet. In einem bevorzugten Ausführungsbeispiel wird dann ein weiterer Bremskraftaufbau nur bis maximal zur gespeicherten Größe zugelassen. Dieser Wert spiegelt das maximale Bremsmoment für diese spezielle Fahrsituation wieder. In einem vorteilhaften Ausführungsbeispiel ist der Wert variabel und wird etwas nach unten verschoben, so daß die vorstehend beschriebene Betriebssituation nicht mehr auftritt. Eine weitere Instabilität oder ein High-Rad-Abriss wird ebenso vermieden, wie ein unkomfortables Schwingungsverhalten des Fahrzeugs. Seitenführung und Traktion werden verbessert.

In einem weiteren Ausführungsbeispiel wird ausgehend vom gespeicherten Bremskraftwert der Bremskraftaufbau ab einem bestimmten Schwellenwert, der unterhalb des Maximalwertes liegt, verlangsamt. Im bevorzugten Ausführungsbeispiel einer hydraulischen Bremsanlage, bei welcher die dem Rad zugeordneten Ventilanordnungen über Pulse mit vorbestimmter Pulszeit und/oder vorgegebener Pulspause angesteuert werden, wird bei Überschreiten dieses Schwellenwertes durch den Radbremsdruck die Druckaufbaupulszeit verkleinert (z.B. von 20 ms auf 10 ms) und ggf. gleichzeitig die Druckhaltezeit zwischen zwei Aufbaupulsen vergrößert. In vorteilhafter Weise wird damit ein langsamerer Bremskraftaufbaugradient erreicht, wobei sich die Bremskraft langsamer der kritischen, gespeicherten Bremskraftschwelle annähert, ohne diesen Schwellenwert zu schnell zu erreichen. Würde der Schwellenwert zu schnell erreicht, entstehen Überschwinger, wodurch die oben beschriebene Betriebssituation mit den angegebenen Nachteilen provoziert wird.

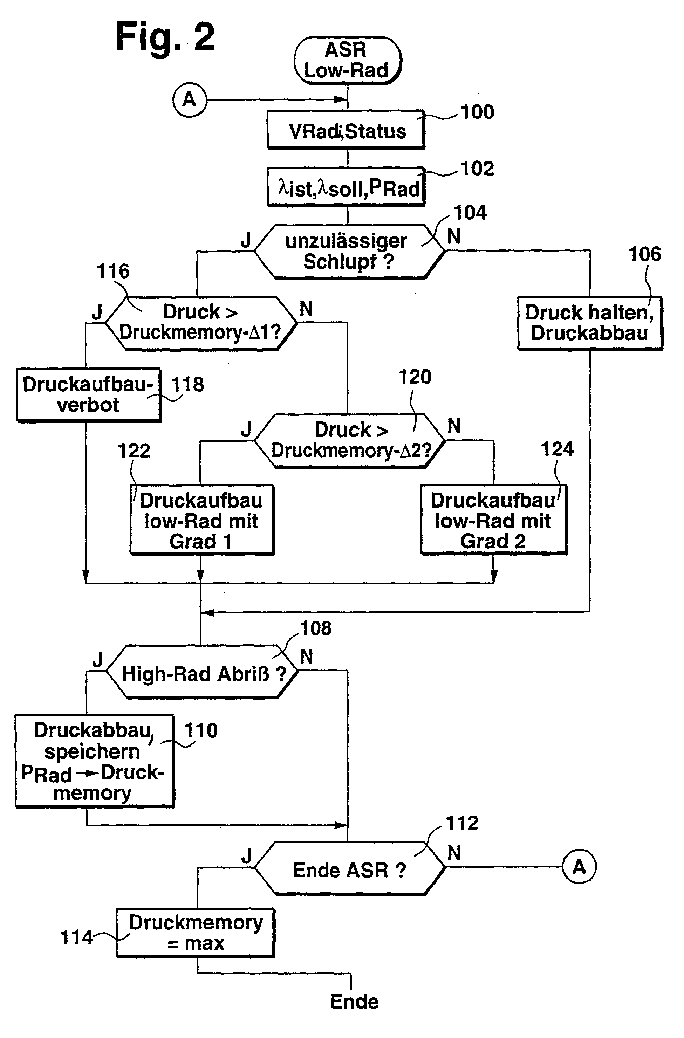

Ein bevorzugtes Ausführungsbeispiel ist anhand des Flußdiagramms nach Figur 2 dargestellt. In Figur 2 ist ein Flußdiagramm skizziert, welches die Realisierung der erfindungsgemäßen Lösung als Rechnerprogramm im Mikrocomputer 12 der Steuereinheit 10 darstellt. Als bevorzugtes Ausführungsbeispiel wird dabei eine hydraulische Bremsanlage angenommen, so daß im Zusammenhang mit dem Ausführungsbeispiel nach Figur 2 von Bremsdrücken die Rede ist. Bei Anwendung an anderen Bremsanlagen bzw. bei Bremsanlagen, bei welchen die Bremskraft, das Bremsmoment, etc. erfaßt wird, ist Bremsdruck durch den entsprechenden Begriff zu ersetzen.

Das in Figur 2 dargestellte Programm wird eingeleitet, wenn erstmalig ein Antriebsschlupfregeleingriff an einem Antriebsrad, welches im folgenden als Low-Rad definiert wird, in Folge unzulässigen Schlupfes an diesem Rad eingeleitet wird. Im ersten Schritt 100 werden die Radgeschwindigkeiten VRADi der Räder eingelesen sowie eine Statusinformation über den Status des anderen Rades, des sogenannten High-Rades. Diese Statusinformation weist auf ein stabiles oder instabiles Verhalten des High-Rades hin, wobei eine Instabilität erkannt wird, wenn das High-Rad ebenfalls einen gewissen Schlupfwert überschreitet. In einem Ausführungsbeispiel ist dieser Schlupfwert kleiner als der Schlupfschwellenwert, der einen Bremseneingriff auslöst. Es wird daher ein Zustand unmittelbar vor der Instabilität ermittelt. Im darauffolgenden Schritt 102 wird dann auf der Basis der Radgeschwindigkeiten der Ist-Schlupf λist des Low-Rades bestimmt, der Soll-Schlupf λSoll vorgegeben sowie beispielsweise auf der Basis der bisher ausgegebenen Pulse der aktuelle Radbremsdruck PRAD bestimmt. Im darauffolgenden Schritt 104 wird überprüft, ob weiterhin unzulässiger Schlupf am Low-Rad vorliegt. Dies ist dann der Fall, wenn der Ist-Schlupf des Rades den Soll-Schlupf übersteigt. Geht man zunächst davon aus, daß nach einem erfolgten Bremsdruckaufbau der unzulässige Schlupf beseitigt ist, wird gemäß Schritt 106 dieser Druck gehalten bzw. im Falle eines negativen Schlupfes Druck abgebaut. Daraufhin wird im Schritt 108 anhand der Statusinformation überprüft, ob eine Instabilität am High-Rad bevorsteht. Ist dies der Fall, wird gemäß Schritt 110 am Low-Rad Druck abgebaut und das zu diesem Zeitpunkt erreichte Druckniveau PRAD in einem Speicher als Wert Druckmemory" abgelegt. Der Druckabbau im Schritt 110 findet solange statt, bis die Instabilität am High-Rad abgeklungen ist. Die Speicherung des Drucks findet dagegen nur einmalig zu Beginn des Druckabbaus statt. Nach Schritt 110 wird wie im Falle einer Nein-Antwort im Schritt 108 im Schritt 112 überprüft, ob die Antriebsschlupfregelung zu beenden ist, d.h. ob das Low-Rad stabil läuft, ohne das Bremsdruck aufgebaut ist. Ist dies nicht der Fall, wird das Programm mit Schritt 100 wiederholt, ist dies der Fall, so wird im Schritt 114 der gespeicherte Wert Druckmemory auf einen Maximalwert gesetzt und das Programm bis zur nächsten Instabilität an einem Rad beendet.

Neigt das High-Rad während des aktuellen Regelzyklus erneut zu einer Instabilität (z.B. bei Reibwertänderung), wird die im Schritt 108 erkannt und der Druckwert angepaßt.

Hat Schritt 104 ergeben, daß am Low-Rad ein unzulässiger Schlupf herrscht, so wird im darauffolgenden Abfrageschritt 116 überprüft, ob der aktuell in der Radbremse herrschende Druck PRAD größer als der gespeicherte Druckwert Druckmemory, ggf. reduziert um einen vorgegebenen Wert Δ (zwischen 0 und 10 bar) ist. Ist dies der Fall, so wird gemäß Schritt 118 der weitere Druckaufbau verboten, d.h. der Druckaufbau begrenzt. Ist dies nicht der Fall, wird gemäß Schritt 120 überprüft, ob das aktuelle Druckniveau PRAD größer ist als der Druckmemory-Wert minus eines zweiten Wertes Δ2, der im Bereich von 0 bis 20 bar liegen kann. Ist dies der Fall, erfolgt gemäß Schritt 122 ein Druckaufbau mit einem ersten Gradienten GRAD1, im anderen Fall gemäß Schritt 124 ein Druckaufbau mit einem zweiten Gradienten GRAD2. Dabei ist der zweite Gradient größer als der erste. Nach den Schritten 118, 122 und 124 wird mit Schritt 108 fortgefahren.

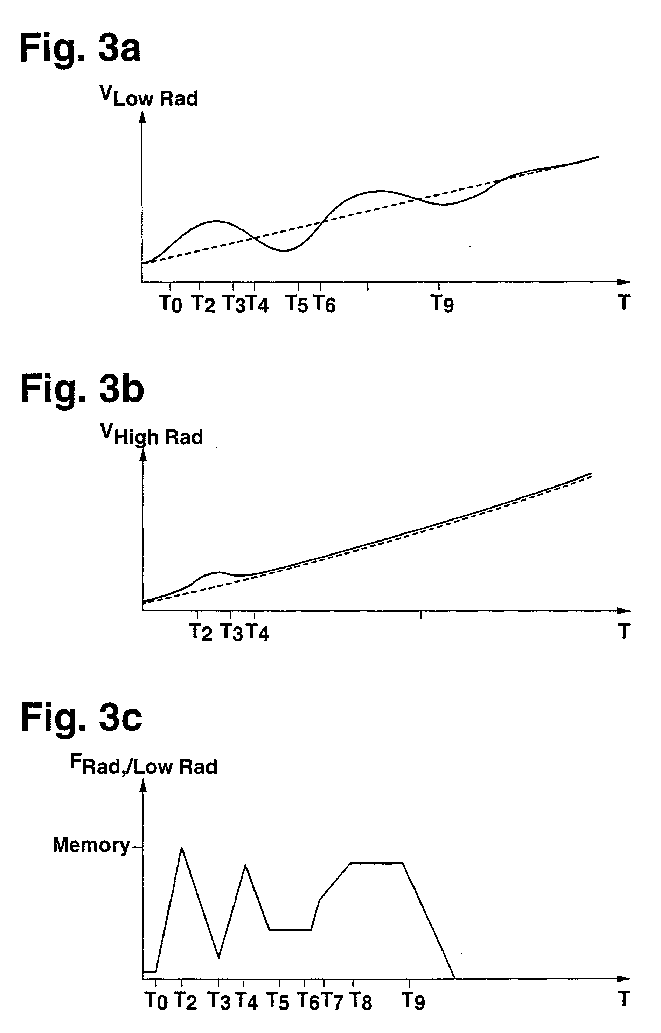

Die beschriebene Vorgehensweise ist anhand von Zeitdiagrammen in Figur 3 verdeutlicht. Figur 3a zeigt den Radgeschwindigkeitsverlauf am Low-Rad, Figur 3b den am High-Rad und Figur 3c den Verlauf der Bremskraft am Low-Rad.

Figur 3 stellt einen Anfahrvorgang dar. Zum Zeitpunkt T0 wird bei stabil laufendem High-Rad ein unzulässiger Schlupf am Low-Rad erkannt und entsprechend (vgl. Figur 3c) Bremskraft aufgebaut. Zum Zeitpunkt T2, während des Bremskraftaufbaus am Low-Rad, wird eine Instabilitätsneigung am High-Rad erkannt (vgl. Figur 3b). Dies führt ab dem Zeitpunkt T2 zu einer Reduzierung der Bremskraft am Low-Rad, bis das High-Rad wieder stabil läuft (vgl. Figur 3b, T3). Da zum Zeitpunkt T3 am Low-Rad weiterhin ein unzulässiger Schlupfzustand vorherrscht, wird Bremskraft erneut aufgebaut. Zum Zeitpunkt T4 (das High-Rad läuft weiterhin stabil) tritt am Low-Rad ein negativer Schlupf auf (Figur 3a), was zu einer Bremskraftreduzierung führt (Figur 3c). Zum Zeitpunkt T5 wird die Bremskraft konstant gehalten, da sich die Radgeschwindigkeit am Low-Rad wieder dem gestrichelt eingezeichneten Sollschlupf nähert (Figur 3a). Zum Zeitpunkt T6 übersteigt die Radgeschwindigkeit wieder den Schwellwert, so daß infolge der Auftretenden Instabilität Bremskraft wieder aufgebaut wird. Dies erfolgt bis zu einem Zeitpunkt T7 mit einem ersten Gradienten, ab einem Zeitpunkt T7 bis zum Erreichen des zum Zeitpunkt T2 gespeicherten Bremskraftniveaus zum Zeitpunkt T8 mit einem zweiten Gradienten (Figur 3c). Obwohl am Low-Rad die Instabilität nicht verschwunden ist, wird die Bremskraft ab dem Zeitpunkt T8 begrenzt, um einen erneuten Abriß des High-Rades zu vermeiden. Zum Zeitpunkt T9 ist die Stabilität des Low-Rades wieder hergestellt, so daß eine Bremskraftreduzierung stattfindet, die infolge fehlender erneuter Instabilität bis auf den Wert Null zurückgeht. Der Antriebsschlupfregeleingriff ist beendet.

Die dargestellte Lösung ist mit den angegebenen Vorteilen immer dort anwendbar, wo eine Betriebssituation auftritt, in der bei geregeltem ersten Rad ein zweites Antriebsrad Instabilitätsneigung zeigt. Besondere Vorteile ergeben sich bei der Anwendung im Anfahrbereich, wenn die Geschwindigkeit des Fahrzeugs kleiner als ein Grenzwert ist.

## Patentansprüche

1. Verfahren zur Antriebsschlupfregelung bei Kraftfahrzeugen, bei welchem bei Auftreten einer Durchdrehneigung an wenigstens einem Antriebsrad dieses gebremst wird, **dadurch gekennzeichnet, daß** bei Auftreten wenigstens einer Betriebssituation während der Antriebsschlupfregelung das dann erreichte Bremskraftniveau am Rad gespeichert und die Bremskraft an diesem Rad im folgenden während der Antriebsschlupfregelung auf diesen Wert begrenzt ist, wobei die wenigstens eine Betriebssituation eine Betriebssituation ist, in der bei geregeltem ersten Rad eine Instabilität am anderen, nicht geregelten Antriebsrad auftritt oder demnächst auftreten wird.

2. Verfahren nach einem der vorhergehenden Ansprüche, **dadurch gekennzeichnet, daß** der Begrenzungswert aus dem gespeicherten Wert abzüglich eines Toleranzwertes gebildet wird.

3. Verfahren nach einem der vorhergehenden Ansprüche, **dadurch gekennzeichnet, daß** bei Auftreten einer Instabilität am anderen Rad die Bremskraft am geregelten Rad reduziert wird.

4. Verfahren nach einem der vorhergehenden Ansprüche, **dadurch gekennzeichnet, daß** ein weiterer Bremskraftaufbau nach Auftreten der bestimmten Betriebssituation mit wenigstens zwei verschiedenen Gradienten erfolgt.

5. Verfahren nach Anspruch 4, **dadurch gekennzeichnet, daß** ausgehend vom gespeicherten Bremskraftwert ein Schwellenwert gebildet wird, unterhalb dessen ein erster, oberhalb dessen ein zweiter Gradient beim Bremskraftaufbau vorgegeben wird.

6. Verfahren nach einem der vorhergehenden Ansprüche, **dadurch gekennzeichnet, daß** die Speicherung des Bremskraftwertes gelöscht wird, wenn die Regelung abgeschlossen ist.

7. Verfahren nach einem der vorhergehenden Ansprüche, **dadurch gekennzeichnet, daß** die Radbremse eine Radbremse mit hydraulischer, pneumatischer oder elektromotorischer Zuspannung ist.

8. Vorrichtung zur Antriebsschlupfregelung bei Kraftfahrzeugen, mit einer Steuereinheit (10), welche bei erkannter Durchdrehneigung an wenigstens einem Antriebsrad Ansteuersignale zur Abbremsung dieses Antriebsrads ausgibt, **dadurch gekennzeichnet, daß** die Steuereinheit (10) einen Speicher umfaßt, in den bei Auftreten wenigstens einer bestimmten Betriebssituation während der Antriebsschlupfregelung das an diesem Rad herrschende Bremskraftniveau abgespeichert wird und die einen Begrenzer umfaßt, welcher den Bremskraftaufbau an diesem Rad auf diesen gespeicherten Bremskraftwert begrenzt, wobei die wenigstens eine bestimmte Betriebssituation eine Betriebssituation ist, in der bei geregeltem ersten Rad eine Instabilität am anderen, nicht geregelten Antriebsrad auftritt oder demnächst auftreten wird.

## Claims

1. Method for traction control in motor vehicles in which, when a tendency to spin occurs at at least one driving wheel, the said driving wheel is braked, **characterized in that**, if at least one operating situation occurs during the traction control, the braking power level then achieved at the wheel is stored and the braking power at this wheel is limited thereafter to this value during the traction control, the at least one operating situation being an operating situation in which, while the first wheel is being controlled, an instability occurs or is about to occur at the other, non-controlled driving wheel.

2. Method according to one of the preceding claims, **characterized in that** the limiting value is formed from the stored value less a tolerance value.

3. Method according to one of the preceding claims, **characterized in that**, when an instability occurs at the other wheel, the braking power at the controlled wheel is reduced.

4. Method according to one of the preceding claims, **characterized in that** a further buildup of braking power after the occurrence of the specific operating situation takes place with at least two different gradients.

5. Method according to Claim 4, **characterized in that**, starting from the stored braking power value, a threshold value is formed, below which a first gradient and above which a second gradient is prescribed for the buildup of braking power.

6. Method according to one of the preceding claims, **characterized in that** the storage of the braking power value is erased when the control is completed.

7. Method according to one of the preceding claims, **characterized in that** the wheel brake is a wheel brake with hydraulic, pneumatic or electromotive application.

8. Device for traction control in motor vehicles, with a control unit (10), which, when a tendency to spin is detected at at least one driving wheel, emits activating signals for the braking of this driving wheel, **characterized in that** the control unit (10) comprises a memory in which, if at least one specific operating situation occurs during the traction control, the braking power level prevailing at this wheel is stored, and which comprises a limiter which limits the braking power buildup at this wheel to this stored braking power value, the at least one specific operating situation being an operating situation in which, while the first wheel is being controlled, an instability occurs or is about to occur at the other, non-controlled driving wheel.

## Revendications

1. Procédé de régulation d'antipatinage de véhicules automobiles selon lequel lorsque se produit une tendance au patinage d'au moins une roue motrice, cette roue est freinée,
**caractérisé en ce que**
lorsque se produit au moins une situation de fonctionnement, pendant la régulation antipatinage on enregistre le niveau de freinage alors atteint sur la roue et on limite à cette valeur la force de freinage sur cette roue au cours de la régulation antipatinage suivante,
cette situation de fonctionnement étant une situation de fonctionnement au cours de laquelle lorsque la première roue est réglée, une instabilité sur l'autre roue motrice non régulée s'est produite ou se produit ensuite.

2. Procédé selon l'une des revendications précédentes,
**caractérisé en ce que**
la valeur de la limitation est formée de la valeur enregistrée dont on a déduit une tolérance.

3. Procédé selon l'une des revendications précédentes,
**caractérisé en ce qu'**
en cas d'instabilité sur une autre roue, on réduit la force de freinage de la roue régulée.

4. Procédé selon l'une des revendications précédentes,
**caractérisé en ce qu'**
après que ce soit produit la situation de fonctionnement déterminée on continue d'augmenter la force de freinage suivant au moins deux gradients différents.

5. Procédé selon la revendication 4,
**caractérisé en ce que**
partant de la valeur de la force de freinage enregistrée en mémoire, on forme un seuil en dessous duquel on a prédéfini un premier gradient pour l'augmentation de la force de freinage et au-dessus duquel on a prévu un second gradient pour l'augmentation de la force de freinage.

6. Procédé selon l'une des revendications précédentes,
**caractérisé en ce qu'**
on efface l'enregistrement de la valeur de la force de freinage à la fin de la régulation.

7. Procédé selon l'une des revendications précédentes,
**caractérisé en ce que**
le frein de roue est à serrage hydraulique, pneumatique ou électropneumatique.

8. Dispositif de régulation du patinage de véhicules automobiles comportant une unité de commande (10) qui, lorsqu'elle reconnaît une tendance au patinage d'au moins une roue motrice, émet des signaux de commande pour freiner cette roue motrice,
**caractérisé en ce que**
l'unité de commande (10) comprend une mémoire dans laquelle lorsque se produit au moins une situation de fonctionnement prédéfinie, pendant la régulation du patinage à l'entraînement on enregistre en mémoire le niveau de la force de freinage sur cette roue et cette unité comporte un limiteur qui limite l'augmentation de la force de freinage sur cette roue à cette valeur enregistrée de la force de freinage, cette situation de fonctionnement étant celle pour laquelle lorsque la première roue est régulée, une instabilité sur l'autre roue motrice non régulée s'est produite ou se produit ensuite.
